# EUROPÄISCHE PATENTSCHRIFT

(11) **EP 2 732 225 B1**
(45) Veröffentlichungstag und Bekanntmachung des Hinweises auf die Patenterteilung: **12.12.2018**
(21) Anmeldenummer: 12733097.5
(22) Anmeldetag: 04.07.2012
(51) Int. Cl.: F25D 23/02, F16L 59/065

(54) **VAKUUMISOLATIONSELEMENT**
VACUUM INSULATION ELEMENT
ÉLÉMENT ISOLANT SOUS VIDE

(30) Priorität: 14.07.2011 DE 102011079209
(43) Veröffentlichungstag der Anmeldung: 21.05.2014
(73) Patentinhaber: BSH Hausgeräte GmbH, 81739 München (DE)
(72) Erfinder: EHNINGER, Christian, 89537 Giengen an der Brenz (DE); SEELMEIER, Michael, 73572 Heuchlingen (DE); STELZER, Jörg, 89537 Giengen (DE)
(86) Internationale Anmeldenummer: PCT/EP2012/063010
(87) Internationale Veröffentlichungsnummer: WO 2013/007568

(56) Entgegenhaltungen:
- EP-A1- 1 335 171
- EP-A1- 1 338 854
- DE-A1- 4 243 135
- US-A- 5 632 543
- US-A- 5 950 395

## Beschreibung

Die vorliegende Erfindung betrifft ein Vakuumisolationspaneel zur Verwendung beim Bau von Kältegeräten, insbesondere von Haushaltskältegeräten. Ein solches Vakuumisolationspaneel ist aus DE 103 42 859 A1 bekannt.

Ein Vakuumisolationspaneel ist im Allgemeinen aufgebaut aus einer hochgradig diffusionsdichten Kunststofffolie und einem porösen Füllmaterial wie etwa Kieselerde, Zeolith, Glasfaser, Polyurethanschaum oder dergleichen, das von der Folie luftdicht ummantelt ist und unter einem Unterdruck gehalten ist. Vakuumisolationspaneele weisen bei geringer Wandstärke ausgezeichnete Isolationseigenschaften auf, sind allerdings aufgrund ihrer aufwendigen Herstellung teuer, und sie sind bei der Kältegerätefertigung schwierig zu handhaben, da sie sich im Gegensatz zu dem herkömmlicherweise verwendeten Polyurethanschaum nicht lückenlos in ein vorgefertigtes hohlwandiges Gehäuse einfügen.

Wenn ein Vakuumisolationspaneel in einem Kältegerätegehäuse verbaut wird, ist es daher gebräuchlich, einen inneren Hohlraum einer das Gehäuse bildenden Schale nur zum Teil mit dem Vakuumisolationspaneel auszufüllen, indem dieses an einer inneren Oberfläche der Schale verklebt wird, und das von dem Vakuumisolationspaneel nicht belegte Restvolumen des Hohlraums der Schale durch Expandierenlassen von Polyurethanschaum auszufüllen. Auch diese Vorgehensweise ist nicht vollauf befriedigend, da die zum Befestigen des Vakuumisolationspaneels benötigten Klebstoffe kostspielig sind und der Klebevorgang selbst komplizierte und zeitaufwendige Handhabungs- und Andrückschritte umfasst. Außerdem bildet ist die Wärmedämmwirkung des Polyurethanschaums der des Vakuumpaneels deutlich unterlegen, so dass Teile des Polyurethanschaums, die sich an den Rändern des Vakuumpaneels vorbei über die gesamte Wandstärke des Gehäuses erstrecken, Wärmebrücken zwischen einer Lagerkammer des Kältegeräts und seiner Umgebung bilden.

So ist aus der US 5 632 543 A bekannt, beim Verbauen eines Vakuumisolationspaneels in einem Kältegerätgehäuse einen inneren Hohlraum einer das Gehäuse bildenden Schale nur zum Teil mit dem Vakuumisolationspaneel auszufüllen, und das von dem Vakuumisolationspaneel nicht belegte Restvolumen des Hohlraums der Schale durch Expandierenlassen von Schaum auszufüllen.

Ferner offenbart die EP 1 338 854 A1 ein Verfahren zum Herstellen eines Kühlschrankgehäuses, welches eine innere kastenförmige Auskleidung und eine äußere Ummantelung aufweist, welche eine doppelwandige Vakuumisolationsstruktur definieren. Ein modularer Rahmen ist in dieser Struktur eingebettet.

Darüber hinaus offenbart die US 5 950 935 A ein Verfahren zum Herstellen eines Kühlschranks mit inneren und äußeren Wänden und einem Vakuumisolationselement, welches zwischen diesen Wänden angebracht ist.

Aufgabe der vorliegenden Erfindung ist, ein Vakuumisolationspaneel zu schaffen, das keine ausgeschäumten Bereiche benötigt, um mit einer für den Einsatz im Kältegerätebau erforderlichen Maßgenauigkeit gefertigt werden zu können.

Unter einem Kältegerät wird insbesondere ein Haushaltskältegerät verstanden, also ein Kältegerät das zur Haushaltsführung in Haushalten oder eventuell auch im Gastronomiebereich eingesetzt wird, und insbesondere dazu dient Lebensmittel und/oder Getränke in haushaltsüblichen Mengen bei bestimmten Temperaturen zu lagern, wie beispielsweise ein Kühlschrank, ein Gefrierschrank, eine Kühlgefrierkombination, eine Gefriertruhe oder ein Weinlagerschrank.

Die Aufgabe wird gelöst, indem bei einem Vakuumisolationspaneel mit einer einen porösen Stützkörper aufnehmenden Schale ein Rand der Schale an einem den Stützkörper umgebenden Rahmen befestigt ist. Der Rand der Schale ist durch einen ebenen Flansch gebildet, und der Rahmen ist an einer Hauptoberfläche des Flansches anliegend befestigt.

Im Gegensatz zu den herkömmlichen Vakuumisolationspaneelen, bei denen der poröse Stützkörper zwischen biegeschlaffen, sich an die Form des Stützkörpers anpassenden Folien eingeschlossen ist, ist die Schale vorzugsweise biegesteif, um eine Verformung durch von außen einwirkenden Luftdruck zu vermeiden bzw. um eine Formanpassung des Stützkörpers an die Schale zu erzielen. Ein solcher Aufbau ist gut geeignet, um plattenförmige Vakuumisolationspaneele mit großen Abmessungen in der Ebene des Rahmens bzw. des Flansches zu fertigen, wie sie für den Bau eines wärmeisolierenden Gehäuses für ein Kältegerät benötigt werden.

Eine solche Formanpassung ist insbesondere dann leicht realisierbar, wenn der Stützkörper aus einem schüttfähigen, partikelförmigen Material besteht, das eine feste Form erst nach dem Evakuieren unter dem Einfluss des es von außen zusammendrückenden Luftdrucks erhält.

Eine den Stützkörper aufnehmende Ausbuchtung der Schale kann vor Beschädigung geschützt werden, indem sie sich von einer ersten Hauptoberfläche des Flansches aus gesehen durch eine Öffnung des Rahmens erstreckt.

Um eine ausreichende Wandstärke des Stützkörpers unterzubringen, kann die Ausbuchtung über eine von dem Flansch abgewandte Seite des Rahmens überstehen.

Der Rahmen ist zweckmäßigerweise aus mehreren hohlen Profilelementen und jeweils in einen Hohlraum der hohlen Profilelemente eingefügten und die Profilelemente verbindenden Winkelstücken zusammengefügt.

Um Wärmeleitung über die Winkelstücke zu minimieren und dennoch eine ausreichende Belastbarkeit zu gewährleisten, haben die Winkelstücke vorzugsweise eine Fachwerkstruktur.

Eine Folie kann an den Rand der Schale angesiegelt sein, um den Stützkörper dicht einzuschließen.

Vorzugsweise ist eine solche Folie an eine der ersten Hauptoberfläche gegenüberliegende zweite Hauptoberfläche des Flansches angesiegelt.

Zweckmäßig ist ferner, wenn der Stützkörper zwischen der Schale und einer steifen Außenhaut eingeschlossen ist.

Eine solche steife Außenhaut könnte zusammen mit der Schale in die luftdichte Umhüllung des Stützkörpers bilden. Bevorzugt ist allerdings, dass der Stützkörper wie oben angegeben zwischen der Schale und der Folie eingeschlossen ist, so dass die steife Außenhaut zum Schutz der Folie vor Beschädigung dienen kann. Die steife Außenhaut muss daher nicht unmittelbar an Vakuum angrenzen und ist daher keiner Verformung durch den Luftdruck ausgesetzt. Dies ist insbesondere dann vorteilhaft, wenn die steife Außenhaut des Vakuumisolationspaneels beim Gebrauch sichtbar bleibt.

Vorzugsweise ist die Außenhaut an dem Vakuumisolationspaneel gehalten, indem sie den Rahmen umgreift. Hierfür können insbesondere die Ränder der Außenhaut zu U-Profilen gebogen sein, die die Profilelemente des Rahmens aufnehmen. Eine solche Anbringung ermöglicht es dem Rahmen, in Bezug auf die Außenhaut zu arbeiten, ohne dass dies zwangsläufig zu einer Verformung der Außenhaut führt.

Das oben beschriebene Vakuumisolationspaneel eignet sich insbesondere, um eine Tür eines Kältegerätes, insbesondere eines Haushaltskältegerätes, zu bilden.

Beschlagteile wie etwa ein Griff und Teile eines die Tür mit einem Korpus des Kältegerätes verbindenden Scharniers sind zweckmäßigerweise am Rahmen verankert, um eine Beanspruchung der Schale durch über die Beschlagteile einwirkende Kräfte zu minimieren.

Die Schale bildet vorzugsweise eine Innenseite der Tür. So kann insbesondere ein Teil der Schale, der sich durch den Rahmen hindurch erstreckt, in einen Hohlraum des Kältegerätekorpus eingreifen.

Die Außenhaut kann zweckmäßigerweise eine Außenseite der Tür bilden.
Weitere Merkmale und Vorteile der Erfindung werden deutlich anhand der nachfolgenden Beschreibung von Ausführungsbeispielen unter Bezugnahme auf die beigefügten Figuren. Aus dieser Beschreibung und den Figuren gehen auch Merkmale der Ausführungsbeispiele hervor, die nicht in den Ansprüchen erwähnt sind. Solche Merkmale können auch in anderen als den hier spezifisch offenbarten Kombinationen auftreten. Die Tatsache, dass mehrere solche Merkmale in einem gleichen Satz oder in einer anderen Art von Textzusammenhang miteinander erwähnt sind, rechtfertigt daher nicht den Schluss, dass sie nur in der spezifisch offenbarten Kombination auftreten können; stattdessen ist grundsätzlich davon auszugehen, dass von mehreren solchen Merkmalen auch einzelne weggelassen oder abgewandelt werden können, sofern dies die Funktionsfähigkeit der Erfindung nicht in Frage stellt. Es zeigen:
- Fig. 1: eine schematische perspektivische Ansicht eines Vakuumisolationspaneels

- Fig. 2: einen partiellen Schnitt durch das Vakuumisolationspaneel

- Fig. 3: einen Querschnitt eines Profilelements
- Fig. 4: ein zum Verbinden von Profilelementen des Rahmens des Vakuumisolationspaneels dienendes Eckstück; und
- Fig. 5: einen partiellen Schnitt durch Tür und Korpus eines mit einem erfindungsgemäßen Vakuumisolationspaneel ausgestatten Kältegerätes.

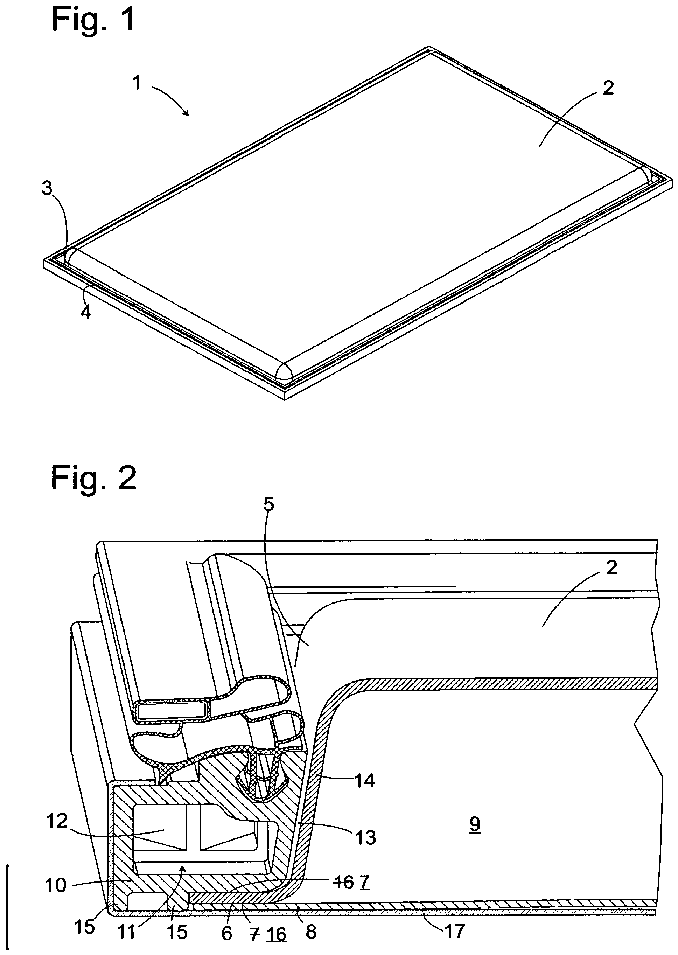

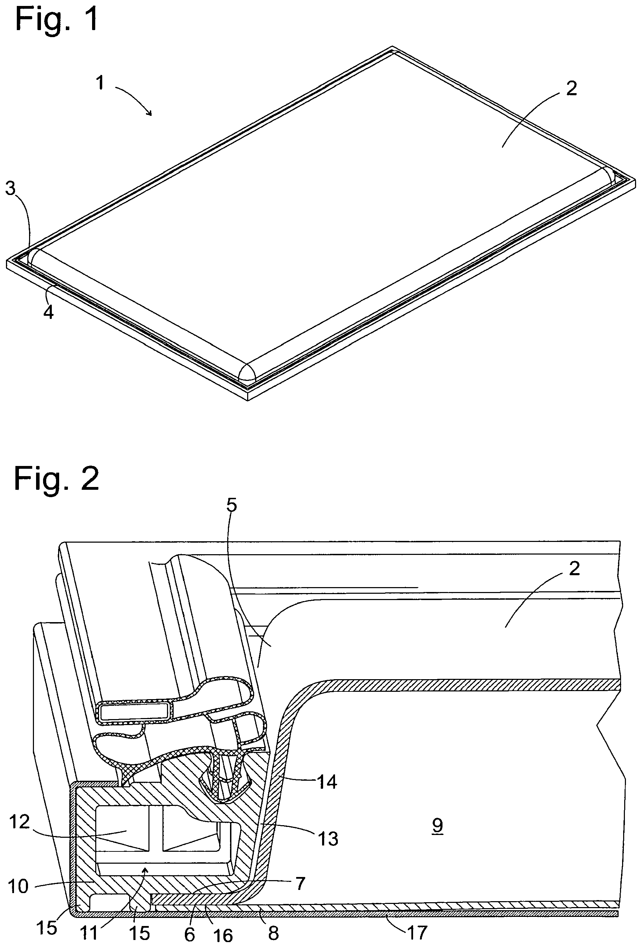

Fig. 1 ist eine perspektivische Ansicht eines Vakuumisolationspaneels, gemäß der vorliegenden Erfindung. Das Vakuumisolationspaneel 1 ist vorgesehen, um eine im Wesentlichen vollständige Tür für ein Haushaltskältegerät zu bilden. Zu sehen ist eine im montierten Zustand dem Korpus des Kältegerätes zugewandte Innenseite der Tür mit einer aus Kunststoff-Flachmaterial tiefgezogenen flachen Schale 2 und einem die Schale 2 einfassenden rechteckigen Rahmen 3, der an seiner in der Perspektive der Fig. 1 nach oben gewandten Innenseite eine rings um die Schale 2 umlaufende Nut 4 zur Verankerung eines an sich bekannten Magnetdichtprofils aufweist.

Fig. 2 zeigt teils im Schnitt, teils in perspektivischer Ansicht eine Ecke des Vakuumisolationspaneels 1 in vergrößertem Maßstab. Die Schale 2 umfasst eine - in der Perspektive der Fig. 1 und 2 nach oben gerichtete - Ausbuchtung 5 und einen sich rings um die Ausbuchtung 5 erstreckenden ebenen Flansch 6. An eine der Ausbuchtung 5 gegenüber liegende Hauptoberfläche 7 des Flansches 6 ist eine flexible Folie 8 luftdicht angesiegelt, z.B. durch Klebung oder Verschweißung, insbesondere Ultraschall oder Reibschweißung.

Schale 2 und Folie 8 haben jeweils eine in der Fig. 2 im Detail nicht dargestellte Verbundstruktur mit strapazierfähigen, zum Schweißen oder Kleben geeigneten Außenschichten und einer durch diese geschützten diffusionsdichten Innenschicht.

Das Innere der Ausbuchtung 5 ist evakuiert und formstabilisiert durch darin eingefülltes poröses Stützmaterial 9 in Form eines Kieselerde- oder Zeolithgranulats. Die Menge des Granulats ist so bemessen, dass die Folie 8 in evakuiertem Zustand eben oder, wie in der Fig. gezeigt, an ihrer Außenseite leicht konkav ist. Indem die Folie 8 dem Luftdruck relativ leicht nachgibt, kann ein Gleichgewicht zwischen dem Luftdruck und dem Gegendruck des Stützmaterials 9 nach dem Evakuieren im Wesentlichen ausschließlich durch Verformung der Folie erreicht werden und eine Verformung der Schale 2 findet nicht oder allenfalls in geringem Umfang statt.

Der Rahmen 3 setzt sich zusammen aus vier extrudierten Hohlprofilelementen 10 und die Hohlprofilelemente im rechten Winkel verbindenden, in Kammern 11 der Hohlprofilelemente 10 eingreifenden Winkelstücken 12. Ein Spalt 13 zwischen einer Seitenwand 14 der Schale 2 und einem gegenüberliegenden Hohlprofilelement 10 gleicht eventuelle Fertigungstoleranzen der Schale 2 aus. An einer in der Fig. 2 nach unten gewandten Außenseite der Hohlprofilelemente 10 sind zwei flache Rippen 15 geformt, deren Höhe der gemeinsamen Dicke des Flansches 6 und der Folie 8 entspricht, so dass die Stirnflächen der Rippen 15 mit der Außenseite der Folie 8 - zumindest an deren am Flansch 6 befestigten Rand - bündig sind. Eine von der Folie 8 abgewandte Hauptoberfläche 16 des Flansches 6 ist benachbart zur Inneren der beiden Rippen 15 an der Außenseite des Hohlprofilelements 10 verklebt.

Eine Außenhaut 17, z.B. aus lackiertem Blech, überdeckt die Folie 8 und die Rippen 15. Randbereiche der Außenhaut 17 sind U-förmig um die Hohlprofilelemente 10 herum geformt, um die Außenhaut 17 formschlüssig an dem Rahmen 3 zu verankern. Eine Verklebung der Außenhaut 17 am Rahmen 3 kann stellenweise vorgesehen werden, erfolgt aber vorzugsweise nicht an zwei einander gegenüberliegenden Hohlprofilelementen 10 gleichzeitig, damit, falls diese sich unter dem Einfluss einer von der Schale 2 ausgeübten Zugkraft biegen, die Biegung nicht auf die Außenhaut 17 übertragen wird.

Wenn das Vakuumisolationspaneel 1 als Tür eines Kältegerätes montiert ist, ist das Hohlprofilelement 10 zwischen dem Spalt 13 und seinem von der Außenhaut 17 berührten Bereichen einem Großteil der Temperaturdifferenz ausgesetzt, die zwischen einem gekühlten Innenraum des Kältegeräts und der Umgebung besteht. Um den Wärmefluss durch die Hohlprofilelemente 10 zu begrenzen, können diese zweckmäßigerweise aus Kunststoff, insbesondere aus einem faserverstärkten Kunststoff, geformt sein. In Betracht kommt auch, wie in Fig. 3 gezeigt, die Verwendung eines Hohlprofilelements 10, das aus einem inneren und einem äußeren Profil 18, 19 zusammengesetzt ist, die miteinander über dünnwandige, schlecht wärmeleitende Stege 20 aus Kunststoff so verbunden sind, dass ein Wärmefluss von innen nach außen durch das Profilelement 10 nur über die Stege 20 möglich ist.

Fig. 4 ist eine perspektivische Ansicht eines die Hohlprofilelemente 10 verbindenden Winkelstücks 12. Um Wärmeleitung durch das Winkelstück hindurch zu minimieren, ist es nicht massiv ausgeführt, sondern als Fachwerkstruktur mit einer der Ausbuchtung 5 zugewandten Innenwand 21, einer gegenüberliegenden Außenwand 22 und die Wände 21, 22 verbindenden, einander kreuzenden Streben 23.

Fig. 5 zeigt in einem Schnitt ähnlich demjenigen der Fig. 2 jeweils ein Stück einer durch das Vakuumisolationspaneel 1 gebildeten Tür sowie einer Wand, hier der Decke 25, eines Korpus des Kältegerätes. Ein an der Decke 25 verschraubter Scharnierträger 26 trägt ein Scharnierbolzen 27, der außerhalb der Schnittebene in eine von oben her in das Hohlprofilelement 10 eingreifende Scharnierhülse 28 eingeschoben ist. In ähnlicher Weise ist ein in der Fig. nicht gezeigter Türgriff mit Hilfe von Schrauben befestigt, die von einer Schmalseite der Tür her in ein sich an dieser Schmalseite erstreckendes Hohlprofilelement 10 eingreifen.

Die Ausbuchtung 5 der Schale 2 reicht weit über die Innenseite der Hohlprofilelemente 10 hinaus bis unter einen vorderen Randbereich der Decke 25. Ein enger Spalt 29 zwischen der Decke 25 und der gegenüberliegenden Seitenwand 14 der Schale 2 begrenzt den Luftaustausch zwischen der Lagerkammer 30 und einem Luftraum 31, der vor dem vorderen Rand der Decke 25 zwischen der Magnetdichtung 32 und der Seitenwand 14 liegt, und verringert so den Wärmezufluss zur Lagerkammer 30 entlang der Ränder der Tür.

## Patentansprüche

1. Vakuumisolationspaneel (1) mit einer einen porösen Stützkörper (9) aufnehmenden Schale (2), wobei ein Rand der Schale (2) an einem den Stützkörper (9) umgebenden Rahmen (3) befestigt ist und der Rand der Schale (2) durch einen ebenen Flansch (6) gebildet ist, **dadurch gekennzeichnet, dass** der Rahmen (3) an einer ersten Hauptoberfläche (7) des Flansches (6) anliegend befestigt ist.

2. Vakuumisolationspaneel (1) nach Anspruch 1, **dadurch gekennzeichnet, dass** der Stützkörper (9) aus einem schüttfähigen, partikelförmigen Material besteht.

3. Vakuumisolationspaneel (1) nach einem der vorhergehenden Ansprüche, **dadurch gekennzeichnet, dass** eine den Stützkörper (9) aufnehmende Ausbuchtung (5) der Schale (2) sich von der ersten Hauptoberfläche (7) des Flansches (6) aus gesehen durch eine Öffnung des Rahmens (3) erstreckt.

4. Vakuumisolationspaneel (1) nach Anspruch 3, **dadurch gekennzeichnet, dass** die Ausbuchtung (5) über eine von dem Flansch (6) abgewandte Seite des Rahmens (3) übersteht.

5. Vakuumisolationspaneel (1) nach einem der vorhergehenden Ansprüche, **dadurch gekennzeichnet, dass** der Rahmen (3) aus mehreren hohlen Profilelementen (10) und jeweils in einen Hohlraum (11) der hohlen Profilelemente (10) eingefügten und die Profilelemente (10) verbindenden Winkelstücken (12) zusammengefügt ist.

6. Vakuumisolationspaneel (1) nach Anspruch 5, **dadurch gekennzeichnet, dass** die Winkelstücke (12) eine Fachwerkstruktur aufweisen.

7. Vakuumisolationspaneel (1) nach einem der vorhergehenden Ansprüche, **dadurch gekennzeichnet, dass** eine Folie (8) an den Rand der Schale (2) angesiegelt ist, um den Stützkörper (9) dicht einzuschließen.

8. Vakuumisolationspaneel (1) nach Anspruch 7, **dadurch gekennzeichnet, dass** die Folie (8) an eine der ersten Hauptoberfläche (7) gegenüberliegende zweite Hauptoberfläche (16) des Flansches (6) angesiegelt ist.

9. Vakuumisolationspaneel (1) nach einem der vorhergehenden Ansprüche, **dadurch gekennzeichnet, dass** der Stützkörper (9) zwischen der Schale (2) und einer steifen Außenhaut (17) eingeschlossen ist.

10. Vakuumisolationspaneel (1) nach Anspruch 9, **dadurch gekennzeichnet, dass** die Außenhaut (17) den Rahmen (3) formschlüssig umgreift.

11. Vakuumisolationspaneel (1) nach Anspruch 9 oder 10, soweit auf Anspruch 8 rückbezogen, **dadurch gekennzeichnet, dass** die Außenhaut (17) die Folie (8) überdeckt.

12. Vakuumisolationspaneel (1) nach einem der vorhergehenden Ansprüche, **dadurch gekennzeichnet, dass** es eine Tür eines Kältegeräts, insbesondere eines Haushaltskältegeräts ist.

13. Vakuumisolationspaneel (1) nach Anspruch 12, **dadurch gekennzeichnet, dass** ein Beschlagteil (27) am Rahmen (3) verankert ist.

14. Vakuumisolationspaneel (1) nach Anspruch 12 oder 13, **dadurch gekennzeichnet, dass** die Schale (2) eine Innenseite der Tür bildet.

15. Vakuumisolationspaneel (1) nach einem der Ansprüche 12 bis 14, soweit auf Anspruch 11 rückbezogen, **dadurch gekennzeichnet, dass** die Außenhaut (17) eine Außenseite der Tür bildet.

16. Kältegerät, insbesondere Haushaltskältegerät, mit zumindest einer Geräteaußenwand, die ein Vakuumisolationspaneel (1) nach einem der vorhergehenden Ansprüche umfasst.

17. Kältegerät nach Anspruch 16, **dadurch gekennzeichnet, dass** die Geräteaußenwand eine Tür des Kältegeräts ist.

## Claims

1. Vacuum insulation panel (1) having a shell (2) accommodating a porous supporting body (9), wherein an edge of the shell (2) is attached to a frame (3) surrounding the supporting body (9) and the edge of the shell (2) is formed by a level flange (6), **characterised in that** the frame (3) is attached in abutment to a first main surface (7) of the flange (6).

2. Vacuum insulation panel (1) according to claim 1, **characterised in that** the supporting body (9) consists of a pourable, particulate material.

3. Vacuum insulation panel (1) according one of the preceding claims, **characterised in that** a convexity (5) in the shell (2) accommodating the supporting body (9) extends, seen from the first main surface (7) of the flange (6), through an opening in the frame (3).

4. Vacuum insulation panel (1) according to claim 3, **characterised in that** the convexity (5) projects over a side of the frame (3) facing away from the flange (6).

5. Vacuum insulation panel (1) according to one of the preceding claims, **characterised in that** the frame (3) is assembled from a plurality of hollow profile elements (10) and angle pieces (12) in each case inserted into a cavity (11) of the hollow profile elements (10) and connecting the profile elements (10).

6. Vacuum insulation panel (1) according to claim 5, **characterised in that** the angle pieces (12) have a lattice structure.

7. Vacuum insulation panel (1) according to one of the preceding claims, **characterised in that** a film (8) is sealed to the edge of the shell (2) in order to tightly enclose the supporting body (9).

8. Vacuum insulation panel (1) according to claim 7, **characterised in that** the film (8) is sealed to a second main surface (16) of the flange (6) opposite the first main surface (7).

9. Vacuum insulation panel (1) according to one of the preceding claims, **characterised in that** the supporting body (9) is enclosed between the shell (2) and a rigid outer skin (17).

10. Vacuum insulation panel (1) according to claim 9, **characterised in that** the outer skin (17) encompasses the frame (3) in a form-fit manner.

11. Vacuum insulation panel (1) according to claim 9 or 10, where dependent on claim 8, **characterised in that** the outer skin (17) covers the foil (8).

12. Vacuum insulation panel (1) according to one of the preceding claims, **characterised in that** it is a door of a refrigerator, in particular a household refrigerator.

13. Vacuum insulation panel (1) according to claim 12, **characterised in that** a fitting component (27) is anchored to the frame (3).

14. Vacuum insulation panel (1) according to claim 12 or 13, **characterised in that** the shell (2) forms an inner side of the door.

15. Vacuum insulation panel (1) according to one of claims 12 to 14, where dependent on claim 11, **characterised in that** the outer skin (17) forms an outer side of the door.

16. Refrigerator, in particular household refrigerator, having at least one device outer wall which comprises a vacuum insulation panel (1) according to one of the preceding claims.

17. Refrigerator according to claim 16, **characterised in that** the device outer wall is a door of the refrigerator.

## Revendications

1. Panneau isolant sous vide (1) comprenant une coque (2) logeant un corps de support (9) poreux, un bord de la coque (2) étant fixé sur un cadre (3) entourant le corps de support (9), et le bord de la coque (2) étant formé par une bride (6) plane, **caractérisé en ce que** le cadre (3) est fixé en étant adjacent à une première surface principale (7) de la bride (6).

2. Panneau isolant sous vide (1) selon la revendication 1, **caractérisé en ce que** le corps de support (9) est constitué d'une matière en vrac en forme de particules.

3. Panneau isolant sous vide (1) selon l'une quelconque des revendications précédentes, **caractérisé en ce qu'**un renflement (5) de la coque (2), logeant le corps de support (9), s'étend, en vue depuis la première surface principale (7) de la bride (6), à travers une ouverture du cadre (3).

4. Panneau isolant sous vide (1) selon la revendication 3, **caractérisé en ce que** le renflement (5) fait saillie au-dessus d'un côté du cadre (3), détourné de la bride (6).

5. Panneau isolant sous vide (1) selon l'une quelconque des revendications précédentes, **caractérisé en ce que** le cadre (3) est assemblé à partir de plusieurs éléments profilés (10) creux et de pièces angulaires (12) respectivement insérées dans un espace creux (11) des éléments profilés (10) creux et reliant les éléments profilés (10).

6. Panneau isolant sous vide (1) selon la revendication 5, **caractérisé en ce que** les pièces angulaires (12) présentent une structure en treillis.

7. Panneau isolant sous vide (1) selon l'une quelconque des revendications précédentes, **caractérisé en ce qu'**un film (8) est scellé sur le bord de la coque (2) afin d'inclure le corps de support (9) de manière étanche.

8. Panneau isolant sous vide (1) selon la revendication 7, **caractérisé en ce que** le film (8) est scellé sur une deuxième surface principale (16) de la bride (6), opposée à la première surface principale (7).

9. Panneau isolant sous vide (1) selon l'une quelconque des revendications précédentes, **caractérisé en ce que** le corps de support (9) est inclus entre la coque (2) et une peau extérieure (17) rigide.

10. Panneau isolant sous vide (1) selon la revendication 9, **caractérisé en ce que** la peau extérieure (17) entoure le cadre (3) par adhérence de forme.

11. Panneau isolant sous vide (1) selon la revendication 9 ou 10, dans la mesure où elle fait renvoi à la revendication 8, **caractérisé en ce que** la peau extérieure (17) recouvre le film (8).

12. Panneau isolant sous vide (1) selon l'une quelconque des revendications précédentes, **caractérisé en ce qu'**il est une porte d'un appareil frigorifique, notamment d'un appareil frigorifique à usage domestique.

13. Panneau isolant sous vide (1) selon la revendication 12, **caractérisé en ce qu'**une ferrure (27) est fixée sur le cadre (3).

14. Panneau isolant sous vide (1) selon la revendication 12 ou 13, **caractérisé en ce que** la coque (2) forme un côté intérieur de la porte.

15. Panneau isolant sous vide (1) selon l'une quelconque des revendications 12 à 14, dans la mesure où elle fait renvoi à la revendication 11, **caractérisé en ce que** la peau extérieure (17) forme un côté extérieur de la porte.

16. Appareil frigorifique, notamment appareil frigorifique à usage domestique, comprenant au moins une paroi extérieure d'appareil qui comprend un panneau isolant sous vide (1) selon l'une quelconque des revendications précédentes.

17. Appareil frigorifique selon la revendication 16, **caractérisé en ce que** la paroi extérieure d'appareil est une porte de l'appareil frigorifique.
